# EUROPÄISCHE PATENTANMELDUNG

(11) **EP 2 219 391 A1**
(43) Veröffentlichungstag der Anmeldung: **18.08.2010**
(21) Anmeldenummer: 10151358.8
(22) Anmeldetag: 22.01.2010
(51) Int. Cl.: H04R 25/00

(54) **Hörvorrichtung mit individuell ausgerichteter Elektronikkomponente und Herstellungsverfahren**

(30) Priorität: 17.02.2009 DE 102009009286
(71) Anmelder: Siemens Medical Instruments Pte. Ltd., Singapore 139959 (SG)
(72) Erfinder: Klemenz, Harald, 90766 Fürth (DE); Lim, Poh Chye, 431014 Singapore (SG); Wild, Markus, 84339 Unterdietfurt (DE); Yau, Kim Ho Patrick, 680605 Singapore (SG)
(74) Vertreter: Maier, Daniel Oliver

(57) **Zusammenfassung**

Die Gerätegröße einer Hörvorrichtung soll reduziert werden. Daher wird eine Hörvorrichtung und insbesondere ein IdO-Hörgerät vorgeschlagen mit einer Schale (10), die eine für einen Nutzer spezifische Gestalt besitzt, einem Faceplate (11) zum Verschließen der Schale (10) und einer Elektronikkomponente (15), die mittels einer Auflage (16) an dem Faceplate (11) befestigt ist. Die Auflage (16) ist individuell unter Berücksichtigung der Gestalt der Schale (10) geformt und/oder die Position der Auflage (16) an dem Faceplate (11) ist individuell unter Berücksichtigung der Gestalt der Schale (10) ermittelt. Durch die individuelle Auflage (16) kann Bauraum eingespart werden, so dass sich die Schale (10) verkürzen lässt. Speziell kann die Auflage (16) zur Vereinfachung des Herstellungsverfahrens einteilig mit dem Faceplate (11) gebildet werden.

## Beschreibung

Die vorliegende Erfindung betrifft eine Hörvorrichtung zum Tragen im Gehörgang mit einer Schale, die eine für einen Nutzer spezifische Gestalt besitzt, einem Faceplate zum Verschließen der Schale und einer Elektronikkomponente, die mittels einer Auflage an dem Faceplate befestigt ist. Darüber hinaus betrifft die vorliegende Erfindung ein Verfahren zum Herstellen eines Faceplate-Moduls für eine Hörvorrichtung zum Tragen im Gehörgang durch Bereitstellen einer Schale oder von Geometriedaten einer Schale, die eine für einen Nutzer spezifische Gestalt besitzt, Fertigen eines Faceplate zum Verschließen der Schale und Befestigen einer Elektronikkomponente mittels einer Auflage an dem Faceplate.

Unter einer Hörvorrichtung wird hier jedes in oder am Ohr beziehungsweise am Kopf tragbare schallausgebende Gerät verstanden, insbesondere ein Hörgerät, eine Headset, Kopfhörer und dergleichen.

Hörgeräte sind tragbare Hörvorrichtungen, die zur Versorgung von Schwerhörenden dienen. Um den zahlreichen individuellen Bedürfnissen entgegenzukommen, werden unterschiedliche Bauformen von Hörgeräten wie Hinter-dem-Ohr-Hörgeräte (HdO), Hörgerät mit externem Hörer (RIC: receiver in the canal) und In-dem-Ohr-Hörgeräte (IdO), z.B. auch Concha-Hörgeräte oder Kanal-Hörgeräte (ITE, CIC), bereitgestellt. Die beispielhaft aufgeführten Hörgeräte werden am Außenohr oder im Gehörgang getragen. Darüber hinaus stehen auf dem Markt aber auch Knochenleitungshörhilfen, implantierbare oder vibrotaktile Hörhilfen zur Verfügung. Dabei erfolgt die Stimulation des geschädigten Gehörs entweder mechanisch oder elektrisch.

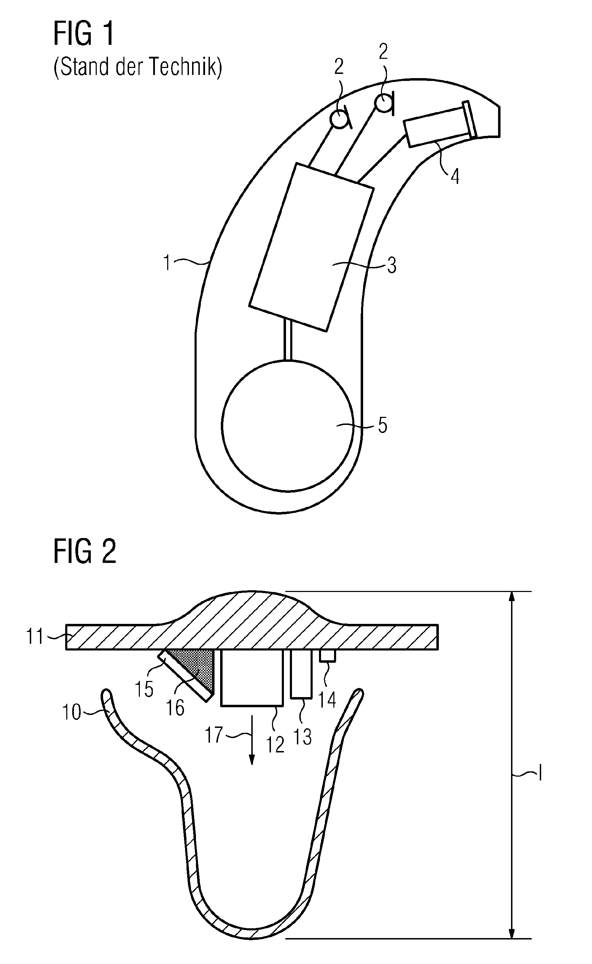

Hörgeräte besitzen prinzipiell als wesentliche Komponenten einen Eingangswandler, einen Verstärker und einen Ausgangswandler. Der Eingangswandler ist in der Regel ein Schallempfänger, z. B. ein Mikrofon, und/oder ein elektromagnetischer Empfänger, z. B. eine Induktionsspule. Der Ausgangswandler ist meist als elektroakustischer Wandler, z. B. Miniaturlautsprecher, oder als elektromechanischer Wandler, z. B. Knochenleitungshörer, realisiert. Der Verstärker ist üblicherweise in eine Signalverarbeitungseinheit integriert. Dieser prinzipielle Aufbau ist in FIG 1 am Beispiel eines Hinter-dem-Ohr-Hörgeräts dargestellt. In ein Hörgerätegehäuse 1 zum Tragen hinter dem Ohr sind ein oder mehrere Mikrofone 2 zur Aufnahme des Schalls aus der Umgebung eingebaut. Eine Signalverarbeitungseinheit 3, die ebenfalls in das Hörgerätegehäuse 1 integriert ist, verarbeitet die Mikrofonsignale und verstärkt sie. Das Ausgangssignal der Signalverarbeitungseinheit 3 wird an einen Lautsprecher bzw. Hörer 4 übertragen, der ein akustisches Signal ausgibt. Der Schall wird gegebenenfalls über einen Schallschlauch, der mit einer Otoplastik im Gehörgang fixiert ist, zum Trommelfell des Geräteträgers übertragen. Die Energieversorgung des Hörgeräts und insbesondere die der Signalverarbeitungseinheit 3 erfolgt durch eine ebenfalls ins Hörgerätegehäuse 1 integrierte Batterie 5.

Hörgeräte und insbesondere auch IdO-Geräte sollen möglichst klein gestaltet werden. Dazu sind möglichst kleine Elektronikkomponenten zu verwenden und diese innerhalb der Hörgeräteschale so anzuordnen, dass möglichst wenig Bauraum verloren geht. Gerade bei der Herstellung sehr kleiner Geräte ist es oft notwendig, den Schaltkreis (z. B. Hybrid-Schaltkreis; Leiterplatte mit Schaltelementen) bezogen auf das Faceplate schräg zu platzieren.

Bei derzeitigen Fertigungsprozessen stehen beispielsweise aufgrund der verschiedenen Geometrien der IdO-Schalen eine Reihe von Standard-Faceplates, die sich in ihrer Größe unterscheiden, zur Verfügung. Die Faceplates werden mit einem elektronisches Modellierverfahren zunächst virtuell in die IdO-Gehäuse so eingepasst, dass die Länge des IdO-Geräts möglichst kurz ist. Um eine minimale Länge zu erreichen, muss der Schaltkreis beziehungsweise Hybrid aufgrund der unterschiedlichen Geometrien der IdO-Gehäuse jeweils individuell (stehend, liegend oder schräg) auf dem Faceplate platziert werden. Zu diesem Zweck wird der Schaltkreis beziehungsweise Hybrid auf eine Auflage, z. B. eine Rampe, aufgeklebt. Derzeit werden somit beispielsweise drei verschiedene Modelle für das elektronische Modellieren verwendet, die sich durch die Auflage für den Schaltkreis unterscheiden (Auflage für stehend, liegend und schräg platzierten Schaltkreis). Der Anwender muss in dem elektronischen Modellierverfahren eines der Modelle auswählen, mit dem schließlich die minimale IdO-Gerätelänge erreicht wird.

Die Aufgabe der vorliegenden Erfindung besteht somit darin, eine Hörvorrichtung bereitzustellen, die kompakter gestaltet ist im Vergleich zu bekannten Hörvorrichtungen und ein entsprechendes Herstellungsverfahren zur Verfügung zu stellen.

Erfindungsgemäß wird diese Aufgabe gelöst durch eine Hörvorrichtung zum Tragen im Gehörgang mit einer Schale, die eine für einen Nutzer spezifische Gestalt besitzt, einem Faceplate zum Verschließen der Schale und einer Elektronikkomponente, die mittels einer Auflage an dem Faceplate befestigt ist, wobei die Auflage individuell unter Berücksichtigung der Gestalt der Schale geformt ist und/oder die Position der Auflage an dem Faceplate individuell unter Berücksichtigung der Gestalt der Schale ermittelt ist.

Darüber hinaus wird erfindungsgemäß bereitgestellt ein Verfahren zum Herstellen eines Faceplate-Moduls für eine Hörvorrichtung zum Tragen im Gehörgang durch Bereitstellen einer Schale oder von Geometriedaten einer Schale, die eine für einen Nutzer spezifische Gestalt besitzt, Fertigen eines Faceplate zum Verschließen der Schale und Befestigen einer Elektronikkomponente mittels einer Auflage an dem Faceplate, sowie Formen der Auflage individuell unter Berücksichtigung der Gestalt der Schale oder deren Geometriedaten und/oder rechnerisches Ermitteln einer Position der Auflage an dem Faceplate individuell unter Berücksichtigung der Gestalt der Schale oder deren Geometriedaten, an der die Auflage mit Elektronikkomponente zu befestigen ist.

In vorteilhafter Weise ist es durch das individuelle Gestalten der Auflage möglich, die Elektronikkomponente mit weniger Zwischenraum in der Schale anzuordnen, so dass der Bauraum insgesamt besser genutzt werden kann. Speziell kann die Form und/oder die Position der Auflage rechnerisch ermittelt werden, so dass der gesamte Fertigungsprozess der Hörvorrichtung weiter optimiert und kostengünstiger gestaltet werden kann.

Vorzugsweise ist die Elektronikkomponente ein Hybridschaltkreis. Derartige Hybridschaltkreise stellen in der Regel verhältnismäßig große Komponenten innerhalb der Hörvorrichtung beziehungsweise des Hörgeräts dar, so dass es besonders lohnend ist, diese optimal zu platzieren.

Gemäß einer besonders bevorzugten Ausführungsform ist das Faceplate mit der Auflage einteilig gebildet. Damit können aufwändige Fertigungsschritte betreffend das individuelle Platzieren einer Auflage und die Logistik der Einzelteile eingespart beziehungsweise in ihrer Komplexität reduziert werden. Das einteilige Herstellen des Faceplate zusammen mit der Auflage erfolgt hier dadurch, dass bei einem Spritzgussverfahren oder aber auch bei einem Lithographie- oder Sinterverfahren die Verfahrensschritte des Fertigens eines Standard-Faceplate und des Formens beziehungsweise Positionierens der Auflage zusammengefasst sind. Speziell wird dann ein Standard-Faceplate durch das Anformen der Auflage individualisiert.

Weiterhin kann das Faceplate ein Positionierelement aufweisen, bei oder mit dem die Auflage an dem Faceplate befestigt ist. Insbesondere ist es dabei vorteilhaft, wenn das Positionierelement als Führungsnut, als Loch oder als Führungsschiene ausgestaltet ist. Hierdurch lässt sich die Auflage mit verhältnismäßig geringem Aufwand an dem Faceplate befestigen.

Die Auflage selbst kann aus einem Gummiband gefertigt sein. Sie lässt sich so an dem Faceplate ankleben und nachträglich einfach durch Zuschneiden bearbeiten.

Im Rahmen des gesamten Herstellungsprozesses ist es meist günstig, mehrere mögliche Positionen für die Auflage zu ermitteln. Ein Konstrukteur kann dann diejenige Position auswählen, die zu dem kleinsten beziehungsweise kürzesten Gerät führt.

Nach dem rechnerischen Ermitteln der Position beziehungsweise Gestalt der individuellen Auflage kann weiterhin die Möglichkeit gegeben werden, einen Parameter der Auflage, z. B. Lage, Geometrie oder Größe, zu ändern. Auch dies kann zu einer weiteren Optimierung der Gerätegröße führen.

Wie bereits angedeutet wurde, kann das Faceplate beispielsweise durch Stereolithographie oder Lasersintern hergestellt werden. Diese Rapid-Prototyping-Verfahren erlauben eine rasche und kostengünstige, individuelle Fertigung.

Die vorliegende Erfindung ist anhand der beigefügten Zeichnungen näher erläutert, in denen zeigen:
- FIG 1: den prinzipiellen Aufbau eines Hörgeräts gemäß dem Stand der Technik;
- FIG 2: einen Längsschnitt durch eine erfindungsgemäße Hörvorrichtung und
- FIG 3: ein Ablaufschema zur erfindungsgemäßen Fertigung eines Faceplate.

Die nachfolgend näher geschilderten Ausführungsbeispiele stellen bevorzugte Ausführungsformen der vorliegenden Erfindung dar.

In FIG 2 ist eine individuell gefertigte IdO-Schale 10 im Längsschnitt dargestellt. Die IdO-Schale 10 wird durch ein Faceplate-Modul (Faceplate 11 mit Elektronikkomponenten) verschlossen. Das Faceplate 11 ist in der Regel ein Standard-Bauteil, das erst bei der Montage auf die Schale 10 individualisiert wird. Dies ist in FIG 2 daran zu erkennen, dass der Rand des Faceplate 11 über den der Schale 10 hinausragt.

An der der Schale 10 zugewandten Seite sind an das Faceplate neben anderen Elektronikbauteilen 12, 13 und 14 auch ein Hybridschaltkreis 15 angebracht. Er ist hier mithilfe einer keilförmigen Auflage 16 an dem Faceplate 11 angeklebt. Durch die keilförmige Auflage 16 kann der Raum in der Schale 10 besser genutzt werden, so dass die Länge l des gesamten IdO-Hörgeräts verkürzt werden kann, da speziell die Schale 10 kürzer ausgebildet werden kann.

In dem Beispiel von FIG 2 wird das Faceplate 11 einschließlich der Komponenten 12 bis 16 gemäß Pfeil 17 auf die Schale 10 aufgesetzt. Da der Hybridschaltkreis 15 ähnlich schräg angeordnet ist, wie der ihm gegenüberstehende Abschnitt der Schale 10, kann der Bauraum im Hörgerät besser ausgenutzt werden. Mit anderen Worten, es wurde der Winkel des Hybridschaltkreises 15 bzw. der Auflage 16 an die individuelle Gestalt der Schale 10 angepasst.

Durch eine Modellierungssoftware ist es beispielsweise möglich, die Faceplates individuell mit Auflagen 16 für die Schaltkreise 15 auszustatten. Hierbei soll zu einem neutralen Standard-Faceplate (ohne Auflage für einen Hybriden beziehungsweise Schaltkreis) eine Auflage hinzugefügt werden. Die Auflage soll so gestaltet beziehungsweise platziert werden, dass eine möglichst geringe IdO-Gerätelänge erreicht wird. Zu diesem Zweck berechnet die Modellierungssoftware die Parameter Lage, Geometrie und Größe (Länge, Breite, Winkel) der Auflage. Die entsprechenden Parameterwerte werden mittels einer Tabelle ausgegeben. Dabei ist es günstig, wenn die Modellierungssoftware dem Anwender mehrere Möglichkeiten für die Platzierung des Hybriden mitteilt. Weiterhin kann die Möglichkeit vorgesehen sein, dass der Anwender eigenständig diese Parameter verändern kann, um weitere Optimierungen vorzunehmen.

Das entworfene Faceplate kann dann einstückig mithilfe eines Rapid-Prototyping-Verfahrens wie STS (Selective Laser Sintering), STL (Stereolithographie), RSM (Rapid Shell Manufacturing), sowie Laserschneiden aus einem Vollkörper oder im Spritzgussverfahren zusammen mit der Auflage hergestellt werden. Natürlich ist es auch möglich, dass die Auflage für den Hybriden beziehungsweise Schaltkreis separat hergestellt wird. Dies kann gemeinsam mit den IdO-Geräteschalen in einem der Rapid-Prototyping-Verfahren, aber auch in den anderen oben genannten Herstellungsverfahren geschehen. Die separat hergestellte Auflage wird dann beispielsweise mittels Klebstoff auf das neutrale Standard-Faceplate, das ebenfalls in einem der oben genannten Fertigungsverfahren hergestellt wurde, aufgebracht.

Der Einsatz der genannten Modellierungssoftware (einschließlich Formung beziehungsweise Platzierung einer Auflage) ermöglicht einerseits - wie geschildert - eine Verkürzung der IdO-Gerätelänge. Andererseits, wenn die Auflage mit dem Faceplate einstückig gebildet ist, bedarf es nicht mehr der Lagerung zahlreicher Standard-Faceplates, da diese individuell hergestellt werden. Wird die Auflage separat hergestellt, so ist es lediglich notwendig, die neutralen Standard-Faceplates auf Lager zu legen.

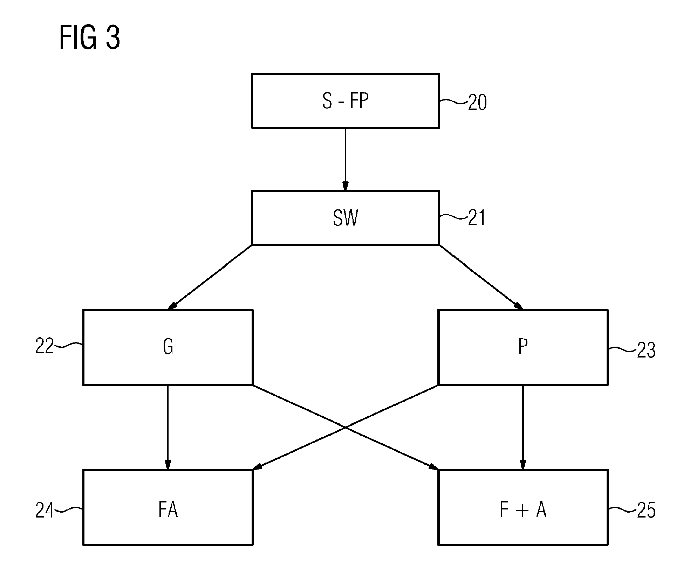

Zur Verbesserung des Herstellungsverfahrens eines Faceplate mit individueller Auflage gibt es verschiedene Ansätze. FIG 3 zeigt schematisch die Grundschritte dieser Herstellungsverfahren. Zunächst wird in einem ersten Schritt 20 ein virtuelles Standard-Faceplate S-FP bereitgestellt. Mithilfe der Modellierungssoftware (SW) 21 werden für das Standard-Faceplate S-FP in Schritt 22 Geometrieparameter G für eine individuelle Auflage 16 ermittelt. Gegebenenfalls werden ähnlich einem Sortierkasten mehrere entsprechende Parameter bereitgestellt. Außerdem werden durch die Software 21 Platzierungswerte für die Auflage 16 in einem Schritt 23 zur Verfügung gestellt. Diese Platzierungswerte P können mehrere mögliche Platzierungen betreffen, die der Anwender auswählen kann.

Schließlich können in einem Arbeitsschritt 24 ein individuelles Faceplate einschließlich Auflage 16 als ein einziges Bauteil (FA) auf der Grundlage des Standard-Faceplate S-FP sowie der Daten G und P erzeugt werden. Beispielsweise wird dieses individualisierte Faceplate im STL-Verfahren mit der gewünschten Auflage hergestellt. Alternativ kann das Faceplate auch mittels eines Lasers einschließlich der gewünschten Auflage aus einem Vollkörper geschnitten werden.

Alternativ zu dem Arbeitsschritt 24 kann in einem Arbeitsschritt 25 die Auflage und das Faceplate separat hergestellt werden (F + A) und anschließend die Auflage auf das Standard-Faceplate aufgebracht werden. Hierbei ist es von Vorteil, wenn die Faceplates 11 mit einem Marker beziehungsweise einem Positionierelement (Führungsnut oder Loch) als Standard- beziehungsweise Neutralteile hergestellt werden. Zur Herstellung eignen sich - wie erwähnt - die Spritzgusstechnik oder Rapid-Prototyping-Verfahren wie STS, STL oder RSM. Des Weiteren werden die Auflagen 16 (z. B. Rampen beziehungsweise Keile) als eigenständige Bauteile in unterschiedlichen Ausführungen ebenfalls in den oben genannten Verfahren hergestellt. Die verschiedenen Auflagen unterscheiden sich in Größe und Winkel. Damit die Auflagen leicht und genau am Faceplate platziert werden können, werden sie mit dem Gegenstück (z. B. Stift) des Markers beziehungsweise Positionierelements versehen. Für den jeweiligen Fall wird schließlich eine Auflage ausgewählt und auf dem Faceplate aufgeklebt. In einer alternativen Ausführungsform können ebenfalls Neutral- beziehungsweise Standard-Faceplates hergestellt werden, welche mit Führungsschienen versehen sind. Diese Führungsschienen gewährleisten gleichzeitig den mechanischen Halt der Auflagen.

Gemäß einer weiteren Ausführungsform wird auf die neutral hergestellten Faceplates ein Gummiband aufgeklebt, welches die Auflage für den Hybriden beziehungsweise Schaltkreis darstellt. Das Gummiband kann in verschiedenen Ausführungen (Winkel und Größe) in der gewünschten Länge von einer Rolle individuell abgeschnitten werden.

Die Vorteile der oben dargestellten Lösungen liegen, wie ebenfalls bereits erwähnt wurde, darin, dass einerseits die IdO-Gerätelänge durch die individuelle Auswahl der Auflagen noch weiter verringert werden kann. Andererseits wird aber auch der Lagerbestand der Faceplates auf ein Standard- beziehungsweise Neutralteil pro Größe minimiert.

## Patentansprüche

1. Hörvorrichtung zum Tragen im Gehörgang mit
- einer Schale (10), die eine für einen Nutzer spezifische Gestalt besitzt,
- einem Faceplate (11) zum Verschließen der Schale (10) und
- einer Elektronikkomponente (15), die mittels einer Auflage (16) an dem Faceplate (11) befestigt ist,
**dadurch gekennzeichnet, dass**
- die Auflage (16) individuell unter Berücksichtigung der Gestalt der Schale (10) geformt ist und/oder
- die Position der Auflage (16) an dem Faceplate (11) individuell unter Berücksichtigung der Gestalt der Schale (10) ermittelt ist.

2. Hörvorrichtung nach Anspruch 1, wobei die Elektronikkomponente (15) ein Hybridschaltkreis ist.

3. Hörvorrichtung nach Anspruch 1 oder 2, wobei das Faceplate (11) mit der Auflage (16) einteilig gebildet ist.

4. Hörvorrichtung nach Anspruch 1 oder 2, wobei das Faceplate (11) ein Positionierelement aufweist, bei oder mit dem die Auflage an dem Faceplate (11) befestigt ist.

5. Hörvorrichtung nach Anspruch 4, wobei das Positionierelement eine Führungsnut, ein Loch oder eine Führungsschiene ist.

6. Hörvorrichtung nach einem der vorhergehenden Ansprüche, wobei die Auflage (16) aus einem Gummiband gefertigt ist.

7. Verfahren zum Herstellen eines Faceplate-Moduls für eine Hörvorrichtung zum Tragen im Gehörgang durch
- Bereitstellen einer Schale (10) oder von Geometriedaten einer Schale, die eine für einen Nutzer spezifische Gestalt besitzt,
- Fertigen eines Faceplate zum Verschließen der Schale (10) und
- Befestigen einer Elektronikkomponente (15) mittels einer Auflage (16) an dem Faceplate (11),
**gekennzeichnet durch**
- Formen der Auflage (16) individuell unter Berücksichtigung der Gestalt der Schale (10) oder deren Geometriedaten und/oder
- rechnerisches Ermitteln einer Position der Auflage (16) an dem Faceplate (11) individuell unter Berücksichtigung der Gestalt der Schale (10) oder deren Geometriedaten, an der die Auflage (10) mit Elektronikkomponente zu befestigen ist.

8. Verfahren nach Anspruch 7, wobei mehrere mögliche Positionen für die Auflage (16) ermittelt werden.

9. Verfahren nach Anspruch 7 oder 8, wobei nach dem rechnerischen Ermitteln der Position diese individuell korrigiert wird.

10. Verfahren nach einem der Ansprüche 7 bis 9, wobei das Faceplate (11) mit der Auflage (16) einteilig hergestellt wird.

11. Verfahren nach einem der Ansprüche 7 bis 10, wobei das Faceplate (11) durch Stereolithographie oder Lasersintern hergestellt wird.
